(19) Europäisches Patentamt / European Patent Office / Office européen des brevets

(11) **EP 3 959 277 B1**

(12) **EUROPEAN PATENT SPECIFICATION**

(45) Date of publication and mention
of the grant of the patent:
**05.08.2026 Bulletin 2026/32**

(21) Application number: **20742957.2**

(22) Date of filing: **03.07.2020**

(51) International Patent Classification (IPC):
**C09D 11/322** *(2014.01)* **C09B 67/22** *(2006.01)*

(52) Cooperative Patent Classification (CPC):
**C09D 11/322; C09B 67/0034; C09B 67/0046**

(86) International application number:
**PCT/JP2020/026158**

(87) International publication number:
**WO 2021/010190 (21.01.2021 Gazette 2021/03)**

(54) **WATER-BASED INK FOR INK-JET RECORDING**

WASSERBASIERTE TINTE FÜR TINTENSTRAHLAUFZEICHNUNG

ENCRE À L'EAU POUR IMPRESSION À JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2019 JP 2019130465**

(43) Date of publication of application:
**02.03.2022 Bulletin 2022/09**

(73) Proprietor: **Brother Kogyo Kabushiki Kaisha Aichi 467-8561 (JP)**

(72) Inventors:
• **KAWAKAMI, Takefumi**
**Nagoya-shi, Aichi 467-8562 (JP)**
• **OKUDA, Satoshi**
**Nagoya-shi, Aichi 467-8562 (JP)**
• **YAMASHITA, Narumi**
**Nagoya-shi, Aichi 467-8561 (JP)**
• **SAKAGUCHI, Ai**
**Nagoya-shi, Aichi 467-8562 (JP)**

(74) Representative: **Prüfer & Partner mbB Patentanwälte · Rechtsanwälte Sohnckestraße 12 81479 München (DE)**

(56) References cited:
**WO-A1-2015/187143 JP-A- 2001 002 962**
**JP-A- 2020 023 604**

**Description**

[Technical Field]

The present invention relates to a water-based ink for ink-jet recording.

[Background Art]

WO 2015/187143 A1 discloses a magenta pigment blend which is a first pigment including a solid solution of Pigment Violet 19 and Pigment Red 122, or Pigment Red 282; and a second pigment including Pigment Red 150. The weight ratio of the first pigment to the second pigment is from 50:50 to 80:20 by pigment solids content.

JP 2001 002962 A discloses a water-based magenta ink for ink-jet recording features comprising a mixed pigment or a solid solution of (1) 2,9-dimethylquinacridone pigment with (2) at least one of other red pigments as a coloring ingredient and not comprising a mixture or a solid solution of 2,9-dimethylquinacridone pigment with non-substituted quinacridone pigment. In the ink the average particle diameter of the above pigment is < =150 nm.

Conventionally, it is known to use a solid solution containing two or more kinds of pigments in a water-based ink for ink-jet recording, to thereby improve the characteristic of the water-based ink for ink-jet recording (see JP 2018 150515 A (Patent Literature 1)).

[Summary]

[Technical Problem]

On the other hand, in the ink-jet recording, the color development (coloring) of a color in the red range is important in view of the visibility. Although it is conceivable that the color development of the color in the red range can be achieved by improving a red ink, it is preferred to achieve the color development of the color in the red range by improving a magenta ink which is included in the three primary colors which are yellow, magenta and cyan.

In particular, there is a high demand for achieving a wide color reproduction range from magenta (hue angle: approximately -40 degrees) to red (hue angle: approximately 40 degrees), and there is also a demand for improvements in the chromaticness of magenta and in the recording density.

In view of the above situation, an object of the present invention is to provide a water-based ink for ink-jet recording which is capable of achieving the wide color reproduction range from magenta to red, and which has satisfactory chromaticness of magenta and satisfactory recording density (namely, an optical density), as well.

[Solution to the Problem]

According to the present invention, there is provided a water-based ink for ink-jet recording including:

a solid solution of a quinacridone pigment including C.I. Pigment Red 122 and C.I. Pigment Violet 19;
an azo pigment including C.I. Pigment Red 146; and
water,
wherein mass ratio (Q:A) of a content amount (Q) of the solid solution of the quinacridone pigment to a content amount (A) of the azo pigment in an entire amount of the water-based ink is in a range of 9:1 to 1:9.

[Effect of the invention]

Since the water-based ink for ink-jet recording related to the present invention uses the solid solution which contains C.I. Pigment Red 122 and C.I. Pigment Violet 19 in combination with C.I. Pigment Red 146 at the predetermined mass ratio, the water-based ink for ink-jet recording related to the present invention is capable of achieving the wide color reproduction range from magenta to red, and which has satisfactory chromaticness of magenta and satisfactory recording density, as well.

[Brief Description of Drawings]

[Fig. 1] Fig. 1 is a graph explaining the synergistic effect of the present invention, and is a view indicating colors (chromaticities) of evaluation samples, respectively, in the L*a*b* color system chromaticity diagram indicating a* and b* on a plane, each of the evaluation samples being prepared in (a) evaluation of hue angle in Examples 1 to 15 and Comparative Examples 1 and 2.

[Fig. 2] Fig. 2 is a schematic perspective view depicting the configuration of an example of an ink-jet recording apparatus related to the present invention.

[Description of Embodiments]

In the present invention, the chromaticness (C*) is calculated, for example, by the following expression based on a* and b* which are based on the L*a*b* color system (CIE 1976 (L*a*b*) color system) normalized or standardized by Commission Internationale d'Eclairage (CIE) in 1976 (see, JIS Z 8729).

$$C^* = \{(a^{*2}) + (b^{*2})\}^{1/2}$$

In the present invention, the term "hue angle" represents, for example, an angle in the L*a*b* color system chromaticity diagram (a*-b* plane) indicating a* and b* on a plane, and is defined as follows:

In $a^* \geq$ (not less than) 0, $b^* \geq 0$ (first quadrant), the hue angle = $\tan^{-1}(b^*/a^*)$;

In $a^* \leq$ (not more than) 0, $b^* \geq 0$ (second quadrant), the hue angle = 180 degrees + $\tan^{-1}(b^*/a^*)$;

In $a^* \leq 0$, $b^* \leq 0$ (third quadrant), the hue angle = 180 degrees + $\tan^{-1}(b^*/a^*)$; and

In $a^* \geq 0$, $b^* \leq 0$ (fourth quadrant), the hue angle = 360 degrees + $\tan^{-1}(b^*/a^*)$.

A water-based ink for ink-jet recording (hereinafter also referred to as a "water-based ink" or an "ink", in some cases) related to the present invention will be explained. The water-based ink related to the present invention includes a quinacridone pigment, an azo pigment and water.

The quinacridone pigment contains a solid solution containing C.I. Pigment Red 122 (hereinafter referred to as "PR122" in some cases) and C.I. Pigment Violet 19 (hereinafter referred to as "PV19" in some cases). In the present invention, the term "solid solution" means a pigment which is present as a mixed crystal of two or more kinds of pigment molecules (in a mixed crystallized state), and is different from being as simply mixing two or more kinds of pigments to each other. The solid solution may be a quinacridone pigment which contains at least PR122 and PV19; it is allowable that the solid solution contains a quinacridone pigment which is different from PR122 and PV19 (hereinafter referred to as "another pigment"), or that the solid solution does not contain the another pigment. In a case that the solid solution contains the another pigment, the content ratio of the another pigment in the entire amount of the solid solution is, for example, smaller than the content amount of the solid solution in the entire amount of the water-based ink, and smaller than the content amount of the C.I. Pigment Red 146 in the entire amount of the water-based ink. The content ratio of the another pigment in the entire amount of the solid solution is, for example, less than 0.3% by mass, is not more than 0.1% by mass, or 0% by mass. Further, it is allowable to use, as the solid solution containing PR122 and PV19, a commercially available product; or it is allowable to produce the solid solution containing PR122 and PV19 by a publicly known producing method.

A content amount (Q) of the quinacridone pigment in the entire amount of the water-based ink is, for example, in a range of 0.5% by mass to 10% by mass, in a range of 1% by mass to 8% by mass, or in a range of 1.5% by mass to 6% by mass.

The quinacridone pigment included in the water-based ink may be only the solid solution containing PR122 and PV19. Alternatively, the water-based ink may further contain a quinacridone pigment which is different from the solid solution containing the PR122 and PV19, in addition to the solid solution containing PR122 and PV19. In the water-based ink, the mass ratio of the solid solution containing PR122 and PV19 in the entire amount of the quinacridone pigment is, for example, not less than 50% by mass, not less than 70% by mass, or 100% by mass.

The azo pigment contains C.I. Pigment Red 146 (hereinafter referred to as "PR146" in some cases). C.I. Pigment Red 146 is a non-solid solution pigment which does not construct a solid solution with another pigment, and which is dispersed in the water-based ink.

A content amount (A) of the azo pigment in the entire amount of the water-based ink is, for example, in a range of 0.5% by mass to 10% by mass, in a range of 1% by mass to 8% by mass, or in a range of 1.5% by mass to 6% by mass.

The azo pigment included in the water-based ink may be only PR146. Alternatively, the water-based ink may further contain an azo pigment which is different from PR146, in addition to PR146. In the water-based ink, the mass ratio of PR146 in the entire amount of the azo pigment is, for example, not less than 50% by mass, not less than 70% by mass, or 100% by mass.

Mass ratio (Q:A) of the content amount (Q) of the quinacridone pigment to the content amount (A) of the azo pigment in the entire amount of the water-based ink is, for example, in a range of Q:A = 9:1 to 1:9. The mass ratio (Q:A) may be made to be, for example, in a range of Q:A = 7:3 to 3:7.

Since the water-based ink uses the solid solution, which contains PR122 and PV19, in combination with PR146 at the predetermined mass ratio as descried above, the water-based ink is capable of achieving the wide color reproduction range from magenta to red, and has satisfactory chromaticness of magenta and satisfactory recording density, as well.

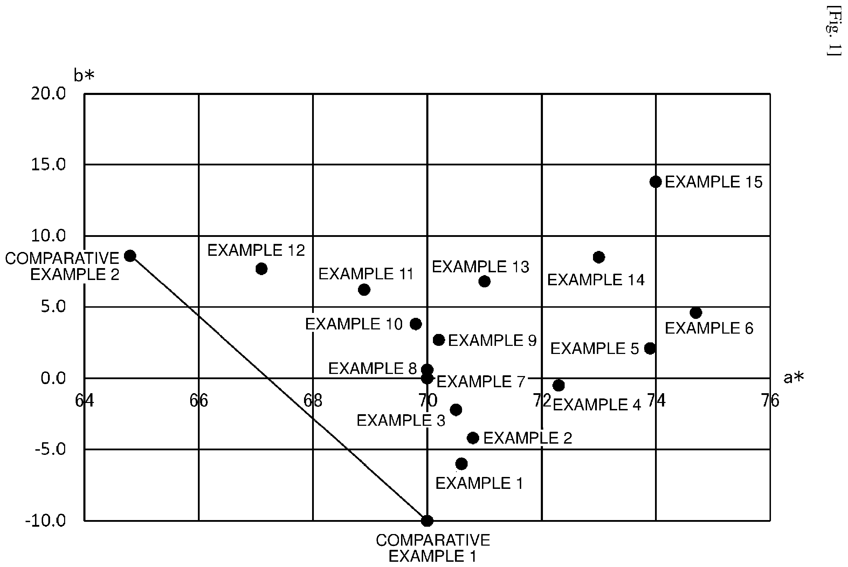

For example, the color (chromaticity) of an image formed by using the water-based ink related to the present invention is plotted at a position at which the chromaticness is high (a position separate and away from the origin), in the region from magenta to red (wherein the hue angle is in a range of approximately -40 degrees to approximately 40 degrees) in the a*-b* plane. This indicates that the water-based ink related to the present invention is capable of achieving a wide color reproduction range from magenta to red. This effect of the water-based ink related to the present invention (wide color reproduction range from magenta to red) exceeds an arithmetic mean intermediate level of the solid solution containing PR122 and PV19, and PR146. As depicted in Fig. 1, the arithmetic mean intermediate level is on a straight line connecting a plot of Comparative Example 1 (to be described later on) singly using the solid solution containing PR122 and PV19, and a plot of Comparative Example 2 (to be described later on) singly using PR146. In contrast, in Examples 1 to 15 (to be described later on) each using the solid solution containing PR122 and PV19 in combination with PR146, a* and b* exceed the above-described straight line, and exhibit the synergistic effect. Here, in the water-based ink (Examples 1 to 15) of the present invention, "a* and b* exceeded the straight line" means that the straight line is located between the plot of the water-based ink of the present invention and the origin in the a*-b* plane shown in Fig. 1. Namely, it means that the chromaticness of the water-based ink of the present invention is higher than the chromaticness of the water-based ink plotted on the straight line having the same hue angle as the water-based ink of the present invention. Note that a* and b* as described above are based on the L*a*b* color system (CIE 1976 (L*a*b*) color system) normalized or standardized by Commission Internationale d'Eclairage (CIE) in 1976 (see, JIS Z 8729).

It is presumed that a case wherein the solid solution containing PR122 and PV19 is used in combination with PR146 at the predetermined mass ratio as described above achieves the above-described effect because the solid solution (mixed crystal) has more excellent uniformity (homogeneity) in a water-based ink, as compared with a case wherein two kinds of the quinacridone pigment are simply mixed. This mechanism, however, is merely a presumption, and the present invention is not limited to or restricted by this presumed mechanism.

A total (Q+A) of the content amount (Q) of the quinacridone pigment and the content amount (A) of the azo pigment in the entire amount of the water-based ink is, for example, in a range of 5% by mass to 8% by mass, in a range of 5% by mass to 7% by mass, or in a range of 6% by mass to 7% by mass.

In a case that the mass ratio (Q:A) is made to be in the range of Q:A = 7:3 to 3:7, and that the total (Q+A) is made to be the range of 5% by mass to 7% by mass, it is possible to obtain a water-based ink which is further excellent in the balance of the hue angle, the chromaticness of magenta and the recording density.

In a case that the mass ratio (Q:A) is made to be in the range of Q:A = 7:3 to 3:7, and that the total (Q+A) is made to be the range of 6% by mass to 7% by mass, it is possible to obtain a water-based ink which is particularly excellent in the recording density, in addition to being further excellent in the balance of the hue angle, the chromaticness of magenta and the recording density.

It is allowable that the water-based ink further contains, for example, a pigment and a dye which are different from the quinacridone pigment and the azo pigment, in addition to the quinacridone pigment and the azo pigment, or that the water-based ink does not further contain a pigment and a dye, etc., which are different from the quinacridone pigment and the azo pigment.

The pigment usable for the water-based ink is exemplified, including the quinacridone pigment and the azo pigment, by: C. I. Pigment Reds 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 221, 222, 224 and 238; C. I. Pigment Violets 19 and 196; etc. Among the above-described pigments, the quinacridone pigment and the azo pigments are particularly preferred.

The water-based ink may be a water-based ink in which the pigment is dispersed in water by a dispersant. As the dispersant, it is allowable to use, for example, a general polymeric dispersant (resin for dispersing pigment, or pigment-dispersing resin), etc. The pigment may be a self-dispersible pigment. The self-dispersible pigment is dispersible in water without using any dispersant, for example, owing to the fact that at least one of the hydrophilic group and the salt thereof including, for example, a carbonyl group, a hydroxyl group, a carboxylic acid group, a sulfonic acid group, a phosphate group, etc., is introduced into the surfaces of the pigment particles by the chemical bond directly or with any group intervening therebetween.

The water is preferably ion-exchanged water or pure water (purified water). The content amount of the water in the entire amount of the water-based ink may be, for example, in a range of 10% by mass to 90% by mass or in a range of 20% by mass to 80% by mass. The content amount of the water in the entire amount of the water-based ink may be, for example, a balance of the other components.

The water-based ink may further contain a surfactant. The surfactant is exemplified, for example, by an acetylene glycol-based surfactant, etc.

It is allowable to use, for example, any commercially available product as the acetylene glycol-based surfactant. The commercially available product is exemplified, for example, by: "SURFYNOL (trade name) 440", "SURFYNOL (trade name) 465" and "SURFYNOL (trade name) 485" which are produced by AIR PRODUCTS AND CHEMICALS, INC.; "OLFIN (trade name) E1004", "OLFIN (trade name) E1008" and "OLFIN (trade name) E1010" which are produced by NISSHIN CHEMICAL CO., LTD.; "ACETYLENOL (trade name) E40" and "ACETYLENOL (trade name) E100" produced by KAWAKEN FINE CHEMICALS CO., LTD.; and the like.

It is allowable that the water-based ink further contains another surfactant which is different from the acetylene glycol-based surfactant, in addition to or instead of the acetylene glycol-based surfactant, or that the water-based ink does not further contain the another surfactant. The another surfactant is exemplified, for example, by: nonionic surfactants of "EMULGEN (trade name)" series, "RHEODOL (trade name)" series, "EMASOL (trade name)" series, "EXCEL (trade name)" series, "EMANON (trade name)" series, "AMIET (trade name)" series, "AMINON (trade name)" series, etc., produced by KAO CORPORATION; nonionic surfactants of "SORBON (trade name)" series produced by TOHO CHEMICAL INDUSTRY CO., LTD.; nonionic surfactants of "DOBANOX (trade name)" series, "LEOCOL (trade name)" series, "LEOX (trade name)" series, "LAOL, LEOCON (trade name)" series, "LIONOL (trade name)" series, "CADENAX (trade name)" series, "LIONON (trade name)" series, "LEOFAT (trade name)" series, etc., produced by LION CORPORATION; anionic surfactants of "EMAL (trade name)" series, "LATEMUL (trade name)" series , "VENOL (trade name)" series, "NEOPELEX (trade name)" series, NS SOAP, KS SOAP, OS SOAP, and "PELEX (trade name)" series, etc., produced by KAO CORPORATION; anionic surfactants of "LIPOLAN (trade name)" series, "LIPON (trade name)" series, "SUNNOL (trade name)" series, "LIPOTAC (trade name)" series, "ENAGICOL (trade name)" series, "LIPAL (trade name)" series, and "LOTAT (trade name)" series, etc., produced by LION CORPORATION; cationic surfactants "KACHIOGEN (trade name) ES-OW" and "KACHIOGEN (trade name) ES-L" produced by DAI-ICHI KOGYO SEIYAKU CO., LTD., etc. It is allowable that only one kind of the another surfactant as described above is used singly, or two or more kinds of the another surfactant are used in combination.

The content ratio of the surfactant is, for example, not less than 5 parts by mass, or in a range of 12.5 parts by mass to 20 parts by mass, to the total, of the content amount of the quinacridone pigment and the content amount of the azo pigment, which is 100 parts by mass. In a case that the content ratio of the surfactant is in the above-described range, ink droplets are appropriately wet and spread on the surface of the recording medium, and thus an image quality is expected to be improved.

The water-based ink may further contain a water-soluble organic solvent. The water-soluble organic solvent is exemplified, for example, by a humectant which prevents the ink from drying at an end of a nozzle in an ink-jet head, a penetrant which adjusts the drying velocity on a recording medium, etc.

The humectant is not particularly limited, and is exemplified, for example, by: lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; ketoalcohols (ketone alcohols) such as diacetone alcohol; ethers such as tetrahydrofuran and dioxane; polyethers such as polyalkylene glycol; polyvalent alcohols such as alkylene glycol, glycerol, trimethylolpropane, trimethylolethane; 2-pyrrolidone; N-methyl-2-pyrrolidone; 1,3-dimethyl-2-imidazolidinone; and the like. The polyalkylene glycol is exemplified, for example, by polyethylene glycol, polypropylene glycol, etc. The alkylene glycol is exemplified, for example, by ethylene glycol, propylene glycol, butylene glycol, diethylene glycol, triethylene glycol, dipropylene glycol, tripropylene glycol, thiodiglycol, hexylene glycol, etc. It is allowable that only one kind of the humectant as described above is used singly, or two or more kinds of the humectant are used in combination. Among the above-described humectants, it is preferable to use polyvalent alcohols such as alkylene glycol, glycerol, etc.

The content amount of the humectant in the entire amount of the water-based ink is, for example, in a range of 0% by mass to 95% by mass, in a range of 5% by mass to 80% by mass, or in a range of 5% by mass to 50% by mass.

The penetrant is exemplified, for example, by glycol ether. The glycol ether is exemplified, for example, by ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, tripropylene glycol-n-butyl ether, etc. One kind of the penetrant may be used singly, or two or more kinds of the penetrant may be used in combination.

The content amount of the penetrant in the entire amount of the water-based ink is, for example, in a range of 0% by mass to 20% by mass, in a range of 0% by mass to 15% by mass, or in a range of 1% by mass to 6% by mass.

The water-based ink may further contain a conventionally known additive, as necessary. The additive includes, for example, pH-adjusting agents, viscosity-adjusting agents, surface tension-adjusting agents, fungicides, fixing agents for glossy paper, etc. The viscosity-adjusting agents include, for example, polyvinyl alcohol, cellulose, water-soluble resin, etc.

The water-based ink can be prepared, for example, such that the quinacridone pigment, the azo pigment, the water, and optionally other additive component(s) as necessary are mixed uniformly or homogeneously by any conventionally known method, and undissolved matters are removed by a filter or the like.

The hue angle of the water-based ink may be, for example, in a range of -5 degrees to 11 degrees, or in a range of -1 degrees to 7 degrees. The above-described range of the hue angle is in the vicinity of the center in the range from magenta to red (wherein the hue angle is in a range of approximately -40 degrees to approximately 40 degrees). By making the hue angle of the water-based ink to be in the vicinity of the center in the range from magenta to red, it is possible to easily reproduce a color in in the range from magenta to red in a case that printing is performed together with another color (for example, yellow). Note that the hue angle of the water-based ink may be measured, for example, by preparing an evaluation sample by using the water-based ink, and by measuring the hue angle of the evaluation sample, as will be explained in Examples (to be described later on).

Next, an ink-jet recording apparatus related to the present invention will be explained.

The ink-jet recording apparatus related to the present invention is characterized by including: an ink storing section and an ink discharging mechanism, wherein an ink stored in the ink storing section is discharged by the ink discharging mechanism, and wherein the water-based ink for ink-jet recording related to the present invention is stored in the ink storing section.

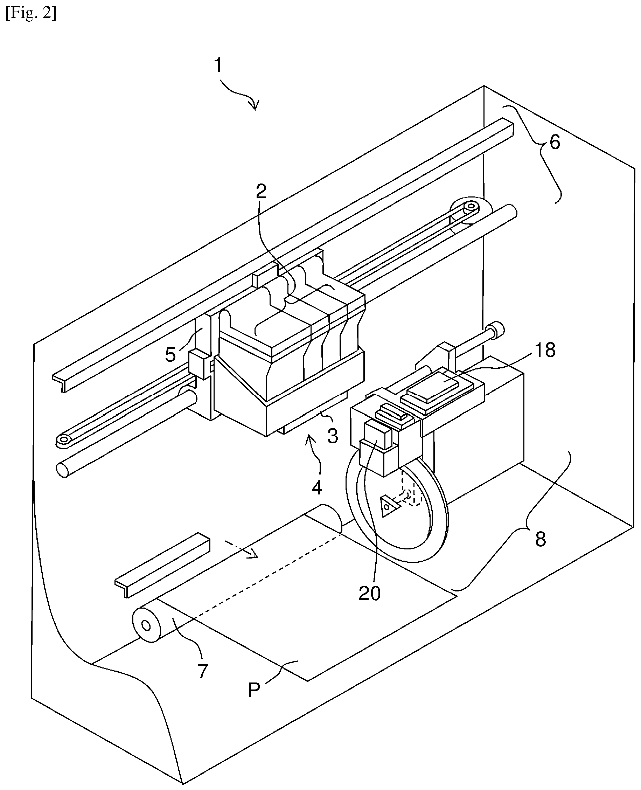

Fig. 2 depicts an example of the configuration of the ink-jet recording apparatus related to the present invention. As depicted in Fig. 2, an ink-jet recording apparatus 1 includes, as main constitutive components, four ink cartridges 2, an ink discharging mechanism (ink jetting mechanism; ink-jet head) 3, a head unit 4, a carriage 5, a driving unit 6, a platen roller 7, and a purge device 8.

Each of the four ink cartridges 2 contains one color ink of four color water-based inks which are water-based yellow, magenta, cyan, and black inks. For example, the water-based magenta ink is the water-based ink for ink-jet recording related to the present invention. In this exemplary embodiment, a set of the four ink cartridges 2 are depicted. However, in place of this four-ink cartridge set, it is also allowable to use an integrated type ink cartridge in which the interior thereof is comparted so that a water-based yellow ink accommodating section, a water-based magenta ink accommodating section, a water-based cyan ink accommodating section, and a water-based black ink accommodating section are formed. As a main body of the ink cartridge, for example, any conventionally known main body of an ink cartridge may be used.

The ink-jet head 3 disposed on the head unit 4 performs recording on a recording medium P (for example, recording paper P or recording paper sheet P). The four ink cartridges 2 and the head unit 4 are provided or arranged on the carriage 5. The driving unit 6 reciprocates the carriage 5 in a linear direction. As the driving unit 6, it is possible to use, for example, a conventionally known driving unit (see, for example, Japanese Patent Application Laid-open No. 2008-246821 corresponding to United States Patent Application Publication No. US2008/0241398 A1). The platen roller 7 extends in the reciprocating direction of the carriage 5 and is arranged to face the ink-jet head 3.

The purge device 8 sucks or draws unsatisfactory ink (poor ink) which contains air bubbles, etc., accumulated or trapped in the inside of the ink-jet head 3. As the purge device 8, it is possible to use, for example, a conventionally known purge device (for example, see Japanese Patent Application Laid-open No. 2008-246821 corresponding to United States Patent Application Publication No. US2008/0241398 A1).

A wiper member 20 is provided on the purge device 8 at a position on the side of the platen roller 7 such that the wiper member 20 is adjacent to the purge device 8. The wiper member 20 is formed to have a spatula shape, and wipes a nozzle-formed surface of the ink-jet head 3 accompanying with the movement (reciprocating movement) of the carriage 5. In Fig. 2, a cap 18 is provided to cover a plurality of nozzles of the ink-jet head 3 which is returned to a reset position upon completion of recording, so as to prevent the water-based inks from drying.

In the ink-jet recording apparatus 1 of the present embodiment, the four ink cartridges 2 are provided, together with the head unit 4, on one carriage 5. However, the present invention is not limited to this. In the ink-jet recording apparatus 1, the respective four ink cartridges 2 may be provided on a carriage which is different (separate) from the carriage on which the head unit 4 is provided. Alternatively, the respective four ink cartridges 2 may be arranged and fixed inside the ink-jet recording apparatus 1, rather than being provided on the carriage 5. In such aspects, for example, the four ink cartridges 2 are connected to the head unit 4 provided on the carriage 5 with tubes, etc., and the water-based inks are supplied from the four ink cartridges 2 via the tubes, respectively, to the head unit 4. Further, in these aspects, it is allowable to use four ink bottles having a bottle shape, instead of using the four ink cartridges 2. In such a case, each of the ink bottles is preferably provided with an inlet port via which the ink is poured from the outside to the inside of each of the ink bottles.

Ink-jet recoding, with the use of the ink-jet recording apparatus 1, is performed, for example, as follows. At first, the recording paper P is supplied from a paper feed cassette (not depicted in the drawings) provided at a side portion or a lower portion of the ink-jet recording apparatus 1. The recording paper P is introduced into the space between the ink-jet head 3 and the platen roller 7. A predetermined recording is performed on the introduced recording paper P with the water-based ink(s) jetted or discharged from the ink-jet head 3. The recording paper P after having the recording performed thereon is discharged from the ink-jet recording apparatus 1. According to the present invention, it is possible to obtain a printed matter in which the wide color reproduction range from magenta to red is achievable, and which has satisfactory chromaticness of magenta and satisfactory recording density, as well. A paper feeding mechanism and a paper discharging mechanism for the recording paper P are omitted from the illustration in Fig. 2.

The apparatus depicted in Fig. 2 adopts the serial type ink-jet head. However, the present invention is not limited to or restricted by this. The ink-jet recording apparatus may be an apparatus which adopts a line type ink-jet head.

**[Examples]**

Next, Examples of the present invention will be explained together with Comparative Examples. Note that the present invention is not limited to and restricted by Examples and Comparative Examples described below.

<Preparation of Aqueous Pigment Dispersions A to D>

Pure water (purified water) was added to 20% by mass of a pigment (a solid solution of PR122 and PV19) and 7% by mass of sodium hydroxide-neutralized product of styrene-acrylic acid copolymer (acid value: 175 mgKOH/g, molecular weight: 10000) so that the entire amount thereof was 100% by mass, followed by being agitated and mixed, and thus a mixture was obtained. The obtained mixture was placed in a wet sand mill charged with zirconia beads of which diameter was 0.3 mm, and was subjected to a dispersing process for 6 (six) hours. Afterwards, the zirconia beads were removed by a separator, and the mixture was filtrated through a cellulose acetate filter (pore size 3.0 $\mu$m). Thus, aqueous pigment dispersion (water pigment dispersion) A indicated in TABLE 1 and TABLE 2 was obtained. Note that the styrene-acrylic acid copolymer is a water-soluble polymer which is generally used as a dispersant for pigment (pigment dispersant). Further, aqueous pigment dispersions B to D indicated in TABLE 1 and TABLE 2 were obtained in a similar manner regarding the aqueous pigment dispersion A except for appropriately changing the kind of pigment, the component ratio and the duration time of dispersing process.

<Examples 1 to 15 and Comparative Examples 1 to 5>

Components, which were included in Ink Composition (TABLE 1 or TABLE 2) and which were different from the aqueous pigment dispersions A to D, were mixed uniformly or homogeneously; and thus an ink solvent was obtained. Subsequently, the obtained ink solvent was added to each of the aqueous pigment dispersions A to D, followed by being mixed uniformly, and thus a mixture was obtained. After that, the obtained mixture was filtrated through a cellulose acetate membrane filter (pore size 3.00 $\mu$m) produced by TOYO ROSHI KAISHA, LTD., and thus a water-based ink for ink jet recording of each of Examples 1 to 15 indicated in TABLE 1 and Comparative Examples 1 to 5 indicated in TABLE 2 was obtained.

With respect to the water-based inks of Examples 1 to 15 and Comparative Examples 1 to 5, respectively, (a) Evaluation of Hue Angle, (b) Evaluation of Chromaticness of Magenta, and (c) Evaluation of Recording Density were performed by the following methods.

(a) Evaluation of Hue Angle

The water-based ink of each of Examples 1 to 15 and Comparative Examples 1 to 5 was coated on dedicated paper "Photo Glossy Paper BP71GA4" produced by BROTHER INDUSTRIES, LTD., so that a coating (application) amount per unit area was made to be approximately 0.90 mg/cm$^2$; thus, an evaluation sample was prepared. The hue angles at 5 (five) locations in the evaluation sample were measured by using a spectrophotometric colorimetry meter "SpectroEye" produced by X-RITE INC., the average value of the hue angles at the five locations was obtained, and the hue angle was evaluated based on the following evaluation criterion.

<Criterion for Evaluation of Hue Angle>

   A: The hue angle was in a range of not less than -1 degrees to not more than 7 degrees.
   B: The hue angle was in a range of not less than -5 degrees to less than -1 degree, or the hue angle exceeded 7 degrees and was not more than 11 degrees.
   C: The hue angle was less than -5 degrees or exceeded 11 degrees.

(b) Evaluation of Chromaticness of Magenta

The values of chromaticness (C*) at 5 (five) locations in the evaluation sample in (a) the evaluation of hue angle as descried above were measured by using the spectrophotometric colorimetry meter "SpectroEye", the average value of the values of chromaticness (C*) at the five locations was obtained, and the chromaticness of magenta was evaluated based on the following evaluation criterion.

<Criterion for Evaluation of Chromaticness of Magenta>

A: The chromaticness (C*) was not less than 70.
B: The chromaticness (C*) was in a range of not less than 66 to less than 70.
C: The chromaticness (C*) was less than 66.

(c) Evaluation of Recording Density

The optical densities (OD values) at 5 (five) locations in the evaluation sample in (a) the evaluation of hue angle as descried above were measured with the spectrophotometric colorimetry meter, SpectroEye (light source: $D_{50}$; field: 2 degrees; ANSI-T); the average value of the OD values measured at the five locations were obtained, and the recording density was evaluated based on the following evaluation criterion.

<Criterion for Evaluation of Recording Density>

AA: The optical density (OD value) was not less than 1.30.
A: The optical density (OD value) was in a range of not less than 1.20 to less than 1.30.
B: The optical density (OD value) was in a range of not less than 1.12 to less than 1.20.
C: The optical density (OD value) was less than 1.12.

The ink composition and the results of evaluations of each of the water-based inks of Examples 1 to 15 and Comparative Examples 1 to 5 are indicated in TABLE 1 and TABLE 2.

TABLE 1 (following) - LEGEND

*1: Aqueous dispersion of the solid solution of PR122 and PV19; numeral in the table indicates pigment solid content amount.
*2: Aqueous dispersion of PR146; numeral in the table indicates pigment solid content amount.
*3: Nonionic surfactant (acetylene glycol-based surfactant); produced by NISSHIN CHEMICAL CO., LTD.; numeral in the table indicates the effective ingredient amount.

The unit in the ink composition in TABLE 1: % by mass

TABLE 1

| Ink composition (% by mass) | | | EXAMPLES | | | | | | | |
|---|---|---|---|---|---|---|---|---|---|---|
| | | | 1 | 2 | 3 | 4 | 5 | 6 | 7 | 8 |
| | Quinacridone pigment (Q) | Aqueous pigment dispersion A (*1) | 4.5 | 4.0 | 3.5 | 4.2 | 4.9 | 5.6 | 3.0 | 2.5 |
| | Azo pigment (A) | Aqueous pigment dispersion B (*2) | 0.5 | 1.0 | 1.5 | 1.8 | 2.1 | 2.4 | 2.0 | 2.5 |
| | Humectant | 86% Glycerol | 8.0 | 8.0 | 8.0 | 8.0 | 8.0 | 8.0 | 8.0 | 8.0 |
| | Penetrant | Triethylene glycol-n-butyl ether | 2.0 | 2.0 | 2.0 | 2.0 | 2.0 | 2.0 | 2.0 | 2.0 |
| | Surfactant | OLFIN (trade name) E1010 (*3) | 1.0 | 1.0 | 1.0 | 1.0 | 1.0 | 1.0 | 1.0 | 1.0 |
| | Water | | balance | balance | balance | balance | balance | balance | balance | balance |
| Q : A | | | 9:1 | 8:2 | 7:3 | 7:3 | 7:3 | 7:3 | 6:4 | 5:5 |
| Q + A | | | 5 | 5 | 5 | 6 | 7 | 8 | 5 | 5 |
| (a) Hue Angle | | | B | B | A | A | A | A | A | A |
| (b) Chromaticness of Magenta | | | A | A | A | A | A | A | A | A |
| (c) Recording Density | | | A | A | A | AA | AA | AA | A | A |

TABLE 1 (continued)

| | | | EXAMPLES | | | | | | |
| --- | --- | --- | --- | --- | --- | --- | --- | --- | --- |
| | | | 9 | 10 | 11 | 12 | 13 | 14 | 15 |
| Ink composition (% by mass) | Quinacridone pigment (Q) | Aqueous pigment dispersion A (*1) | 2.0 | 1.5 | 1.0 | 0.5 | 1.8 | 2.1 | 2.4 |
| | Azo pigment (A) | Aqueous pigment dispersion B (*2) | 3.0 | 3.5 | 4.0 | 4.5 | 4.2 | 4.9 | 5.6 |
| | Humectant | 86% Glycerol | 8.0 | 8.0 | 8.0 | 8.0 | 8.0 | 8.0 | 8.0 |
| | Penetrant | Triethylene glycol-n-butyl ether | 2.0 | 2.0 | 2.0 | 2.0 | 2.0 | 2.0 | 2.0 |
| | Surfactant | OLFIN (trade name) E1010 (*3) | 1.0 | 1.0 | 1.0 | 1.0 | 1.0 | 1.0 | 1.0 |
| | Water | | balance | balance | balance | balance | balance | balance | balance |
| Q : A | | | 4:6 | 3:7 | 2:8 | 1:9 | 3:7 | 3:7 | 3:7 |
| Q + A | | | 5 | 5 | 5 | 5 | 6 | 7 | 8 |
| (a) Hue Angle | | | A | A | A | A | A | A | B |
| (b) Chromaticness of Magenta | | | A | A | B | B | A | A | A |
| (c) Recording Density | | | A | A | B | B | AA | AA | AA |

TABLE 2 (following) - LEGEND

*1: Aqueous dispersion of the solid solution of PR122 and PV19; numeral in the table indicates pigment solid content amount.

*4: Aqueous dispersion of PR122; numeral in the table indicates pigment solid content amount.

*5: Aqueous dispersion of PV19; numeral in the table indicates pigment solid content amount.

*2: Aqueous dispersion of PR146; numeral in the table indicates pigment solid content amount.

*3: Nonionic surfactant (acetylene glycol-based surfactant); produced by NISSHIN CHEMICAL CO., LTD.; numeral in the table indicates the effective ingredient amount.

The unit in the ink composition in TABLE 2: % by mass

TABLE 2

| | | | COMPARATIVE EXAMPLES | | | | |
|---|---|---|---|---|---|---|---|
| | | | 1 | 2 | 3 | 4 | 5 |
| Ink composition (% by mass) | Quinacridone pigment (Q) | Aqueous pigment dispersion A (*1) | 5 | - | - | - | - |
| | | Aqueous pigment dispersion C (*4) | - | - | 1.5 | - | 1.05 |
| | | Aqueous pigment dispersion D (*5) | - | - | - | 1.5 | 0.45 |
| | Azo pigment (A) | Aqueous pigment dispersion B (*2) | - | 5 | 3.5 | 3.5 | 3.5 |
| | Humectant | 86% Glycerol | 8.0 | 8.0 | 8.0 | 8.0 | 8.0 |
| | Penetrant | Triethylene glycol-n-butyl ether | 2.0 | 2.0 | 2.0 | 2.0 | 2.0 |
| | Surfactant | OLFIN (trade name) E1010 (*3) | 1.0 | 1.0 | 1.0 | 1.0 | 1.0 |
| | Water | | balance | balance | balance | balance | balance |
| Q : A | | | 10:0 | 0:10 | 3:7 | 3:7 | 3:7 |
| Q + A | | | 5 | 5 | 5 | 5 | 5 |
| (a) Hue Angle | | | C | B | A | C | A |
| (b) Chromaticness of Magenta | | | A | C | C | B | C |
| (c) Recording Density | | | B | C | B | B | C |

As indicated in TABLE 1, in Examples 1 to 15, the evaluation results were satisfactory in relation to all of (a) Evaluation of hue angle, (b) Evaluation of Chromaticness of Magenta, and (c) Evaluation of Recording Density. Since the hue angle and the chromaticness of magenta were both satisfactory in Examples 1 to 15, it was confirmed that Examples 1 to 15 were each capable of achieving the wide color reproduction range from magenta to red.

Regarding Examples 3 to 5, 7 to 10, 13 and 14 in which Q:A was made to be in the range of Q:A = 7:3 to 3:7 and Q+A was made to be in the range of 5% by mass to 7% by mass were further excellent in the hue angle and in the balance of the hue angle and the chromaticness of magenta, as compared with Examples 1, 2, 11 and 12 in each of which Q:A was made to be Q:A = 9:1, 8:2, 2:8 or 1:9, and as compared with Example 15 in which Q+A was made to be 8% by mass.

Namely, the results of (a) Evaluation of hue angle and (b) Evaluation of Chromaticness of Magenta were both more satisfactory in each of Examples 3 to 5, 7 to 10, 13 and 14. Further, regarding Examples 4, 5, 13 and 14 in which Q:A was made to be in the range of Q:A = 7:3 to 3:7 and Q+A was made to be in the range of 6% by mass to 7% by mass were particularly excellent in the recording density, in addition to further being excellent in the balance of the hue angle, the chromaticness of magenta and the recording density. Namely, the results of all (a) Evaluation of hue angle, (b) Evaluation of Chromaticness of Magenta and (c) Evaluation of Recording Density were more satisfactory in each of Examples 4, 5, 13 and 14.

On the other hand, as indicated in TABLE 2, Comparative Example 1 which did not use the azo pigment had a unsatisfactory result in (a) Evaluation of Hue Angle. Further, Comparative Example 2 which did not use the quinacridone pigment had unsatisfactory results in (b) Evaluation of Chromaticness of Magenta and in (c) Evaluation of Recording Density. Furthermore, Comparative Example 3 which used the PR122 as the quinacridone pigment, rather than using the solid solution of PR122 and PV19 had unsatisfactory results in (b) Evaluation of Chromaticness of Magenta. Moreover, Comparative Example 4 which used the PV19 as the quinacridone pigment, rather than using the solid solution of PR122 and PV19 had unsatisfactory results in (a) Evaluation of Hue Angle. Further, Comparative Example 5 which used PR122 and PV19 in combination as the quinacridone pigment, rather than using the solid solution of PR122 and PV19 had unsatisfactory results in (b) Evaluation of Chromaticness of Magenta and in (c) Evaluation of Recording Density.

[Industrial Applicability]

As described above, the water-based ink related to the present invention is capable of achieving the wide color reproduction range from magenta to red, and which has satisfactory chromaticness of magenta and satisfactory recording density, as well. The water-based ink related to the present invention is widely applicable, for example, to a variety of kinds of the ink-jet recording, as a water-based magenta ink for ink-jet recording.

[Reference Signs List]

1    ink-jet recording apparatus
2    ink cartridges
3    ink discharging mechanism (ink-jet head)
4    head unit
5    carriage
6    driving unit
7    platen roller
8    purge device

**Claims**

1.  A water-based ink for ink-jet recording comprising:

    a solid solution of a quinacridone pigment including C.I. Pigment Red 122 and C.I. Pigment Violet 19;
    an azo pigment including C.I. Pigment Red 146; and
    water,
    wherein mass ratio (Q:A) of a content amount (Q) of the solid solution of the quinacridone pigment to a content amount (A) of the azo
    pigment in an entire amount of the water-based ink is in a range of 9:1 to 1:9.

2.  The water-based ink for ink-jet recording according to claim 1, wherein a total (Q+A) of a content amount (Q) of the solid solution of the quinacridone pigment and a content amount (A) of the azo pigment in the entire amount of the water-based ink is in a range of 5% by mass to 8% by mass.

3.  The water-based ink for ink-jet recording according to claim 2, wherein

    the mass ratio (Q:A) of the content amount (Q) of the solid solution of the quinacridone pigment to the content amount (A) of the azo pigment in the entire amount of the water-based ink is in a range of 7:3 to 3:7; and
    the total (Q+A) of the content amount (Q) of the solid solution of the quinacridone pigment and the content amount (A) of the azo pigment in the entire amount of the water-based ink is in a range of 5% by mass to 7% by mass.

4. The water-based ink for ink-jet recording according to claim 3, wherein the total (Q+A) of the content amount (Q) of the solid solution of the quinacridone pigment and the content amount (A) of the azo pigment in the entire amount of the water-based ink is in a range of 6% by mass to 7% by mass.

5. The water-based ink for ink-jet recording according to any one of claims 1 to 4, further comprising a surfactant, wherein a ratio of a content of the surfactant to a total of 100 parts by mass of a content of the solid solution of the quinacridone pigment and a content of the azo pigment is not less than 5 parts by mass.

6. The water-based ink for ink-jet recording according to claim 5, wherein the ratio of the content of the surfactant to the total of 100 parts by mass of the content of the solid solution of the quinacridone pigment and the content of the azo pigment is in a range of 12.5 parts by mass to 20 parts by mass.

7. The water-based ink for ink-jet recording according to claim 5 or 6, wherein the surfactant is an acetylene glycol-based surfactant.

8. The water-based ink for ink-jet recording according to any one of claims 1 to 7, wherein a hue angle of the water-based ink is in a range of -5 degrees to 11 degrees.

9. The water-based ink for ink-jet recording according to claim 8, wherein the hue angle of the water-based ink is in a range of -1 degrees to 7 degrees.

10. The water-based ink for ink-jet recording according to any one of claims 1 to 9, further comprising a quinacridone pigment which is different from the solid solution.


**Patentansprüche**

1. Wasserbasierte Tinte zum Tintenstrahldrucken, umfassend:

   eine Feststofflösung eines Chinacridonpigments, das C.I. Pigment Red 122 und C.I. Pigment Violet 19 enthält;
   ein Azopigment, das C.I. Pigment Red 146 enthält; und
   Wasser,
   wobei das Massenverhältnis (Q:A) einer Gehaltsmenge (Q) der Feststofflösung des Chinacridonpigments zu einer Gehaltsmenge (A) des Azopigments in einer Gesamtmenge der wasserbasierten Tinte in einem Bereich von 9:1 bis 1:9 liegt.

2. Wasserbasierte Tinte zum Tintenstrahldrucken gemäß Anspruch 1, wobei eine Gesamtmenge (Q+A) einer Gehaltsmenge (Q) der Feststofflösung des Chinacridonpigments und einer Gehaltsmenge (A) des Azopigments in der Gesamtmenge der wasserbasierten Tinte in einem Bereich von 5 Massen-% bis 8 Massen-% liegt.

3. Wasserbasierte Tinte zum Tintenstrahldrucken gemäß Anspruch 2,

   wobei das Massenverhältnis (Q:A) der Gehaltsmenge (Q) der Feststofflösung des Chinacridonpigments zu der Gehaltsmenge (A) des Azopigments in der Gesamtmenge der wasserbasierten Tinte in einem Bereich von 7:3 bis 3:7 liegt; und
   die Gesamtmenge (Q+A) der Gehaltsmenge (Q) der Feststofflösung des Chinacridonpigments und der Gehaltsmenge (A) des Azopigments in der Gesamtmenge der wasserbasierten Tinte in einem Bereich von 5 Massen-% bis 7 Massen-% liegt.

4. Wasserbasierte Tinte zum Tintenstrahldrucken gemäß Anspruch 3, wobei die Gesamtmenge (Q+A) der Gehaltsmenge (Q) der Feststofflösung des Chinacridonpigments und der Gehaltsmenge (A) des Azopigments in der Gesamtmenge der wasserbasierten Tinte in einem Bereich von 6 Massen-% bis 7 Massen-% liegt.

5. Wasserbasierte Tinte zum Tintenstrahldrucken gemäß einem der Ansprüche 1 bis 4, ferner enthaltend ein Tensid, wobei ein Verhältnis eines Gehalts des Tensids zu einer Gesamtmenge von 100 Massenteilen eines Gehalts der Feststofflösung des Chinacridonpigments und eines Gehalts des Azopigments nicht weniger als 5 Massenteile beträgt.

**6.** Wasserbasierte Tinte zum Tintenstrahldrucken gemäß Anspruch 5, wobei das Verhältnis des Gehalts des Tensids zu der Gesamtmenge von 100 Massenteilen des Gehalts der Feststofflösung des Chinacridonpigments und des Gehalts des Azopigments in einem Bereich von 12,5 Massenteilen bis 20 Massenteilen liegt.

**7.** Wasserbasierte Tinte zum Tintenstrahldrucken gemäß Anspruch 5 oder 6, wobei das Tensid ein acetylenglykolbasiertes Tensid ist.

**8.** Wasserbasierte Tinte zum Tintenstrahldrucken gemäß einem der Ansprüche 1 bis 7, wobei ein Farbtonwinkel der wasserbasierten Tinte in einem Bereich von -5 Grad bis 11 Grad liegt.

**9.** Wasserbasierte Tinte zum Tintenstrahldrucken gemäß Anspruch 8, wobei der Farbtonwinkel der wasserbasierten Tinte in einem Bereich von -1 Grad bis 7 Grad liegt.

**10.** Wasserbasierte Tinte zum Tintenstrahldrucken gemäß einem der Ansprüche 1 bis 9, ferner enthaltend ein Chinacridonpigment, das von der Feststofflösung verschieden ist.

**Revendications**

**1.** Encre à base d'eau pour enregistrement par jet d'encre comprenant :

une solution solide d'un pigment de quinacridone comprenant du C.I. Pigment Red 122 et du C.I. Pigment Violet 19 ;
un pigment azoïque comprenant du C.I. Pigment Red 146 ; et
de l'eau,
où le rapport en masse (Q:A) d'une quantité de teneur (Q) de la solution solide du pigment de quinacridone à une quantité de teneur (A) du pigment azoïque dans une quantité totale de l'encre à base d'eau est dans une plage de 9:1 à 1:9.

**2.** Encre à base d'eau pour enregistrement par jet d'encre selon la revendication 1, où un total (Q+A) d'une quantité de teneur (Q) de la solution solide du pigment de quinacridone et d'une quantité de teneur (A) du pigment azoïque dans la quantité totale de l'encre à base d'eau est dans une plage de 5 % en masse à 8 % en masse.

**3.** Encre à base d'eau pour enregistrement par jet d'encre selon la revendication 2, où le rapport en masse (Q:A) de la quantité de teneur (Q) de la solution solide du pigment de quinacridone à la quantité de teneur (A) du pigment azoïque dans la quantité totale de l'encre à base d'eau est dans une plage de 7:3 à 3:7 ; et
le total (Q+A) de la quantité de teneur (Q) de la solution solide du pigment de quinacridone et de la quantité de teneur (A) du pigment azoïque dans la quantité totale de l'encre à base d'eau est dans une plage de 5 % en masse à 7 % en masse.

**4.** Encre à base d'eau pour enregistrement par jet d'encre selon la revendication 3, où le total (Q+A) de la quantité de teneur (Q) de la solution solide du pigment de quinacridone et de la quantité de teneur (A) du pigment azoïque dans la quantité totale de l'encre à base d'eau est dans une plage de 6 % en masse à 7 % en masse.

**5.** Encre à base d'eau pour enregistrement par jet d'encre selon l'une quelconque des revendications 1 à 4, comprenant en outre un tensioactif,
où un rapport d'une teneur du tensioactif à un total de 100 parties en masse d'une teneur de la solution solide du pigment de quinacridone et d'une teneur du pigment azoïque n'est pas inférieur à 5 parties en masse.

**6.** Encre à base d'eau pour enregistrement par jet d'encre selon la revendication 5, où le rapport de la teneur du tensioactif au total de 100 parties en masse de la teneur de la solution solide du pigment de quinacridone et de la teneur du pigment azoïque est dans une plage de 12,5 parties en masse à 20 parties en masse.

**7.** Encre à base d'eau pour enregistrement par jet d'encre selon la revendication 5 ou 6, où le tensioactif est un tensioactif à base d'acétylène glycol.

**8.** Encre à base d'eau pour enregistrement par jet d'encre selon l'une quelconque des revendications 1 à 7, où un angle de teinte de l'encre à base d'eau est dans une plage de -5 degrés à 11 degrés.

9. Encre à base d'eau pour enregistrement par jet d'encre selon la revendication 8, où l'angle de teinte de l'encre à base d'eau est dans une plage de -1 degrés à 7 degrés.

10. Encre à base d'eau pour enregistrement par jet d'encre selon l'une quelconque des revendications 1 à 9, comprenant en outre un pigment de quinacridone qui est différent de la solution solide.

[Fig. 1]

[Fig. 2]

**REFERENCES CITED IN THE DESCRIPTION**

**Patent documents cited in the description**

- WO 2015187143 A1
- JP 2001002962 A
- JP 2018150515 A
- JP 2008246821 A
- US 20080241398 A1